# EUROPEAN PATENT SPECIFICATION

(11) **EP 3 242 238 B1**
(45) Date of publication and mention of the grant of the patent: **23.02.2022**
(21) Application number: 17168489.7
(22) Date of filing: 27.04.2017
(51) Int. Cl.: G06F 21/31

(54) **VERIFICATION METHOD AND APPARATUS FOR DISTINGUISHING MAN FROM MACHINE**
VERIFIZIERUNGSVERFAHREN UND VORRICHTUNG ZUR UNTERSCHEIDUNG ZWISCHEN MENSCHEN UND MASCHINEN
PROCÉDÉ ET APPAREIL DE VÉRIFICATION PERMETTANT DE DISTINGUER L'HOMME DE LA MACHINE

(30) Priority: 05.05.2016 CN 201610292900
(43) Date of publication of application: 08.11.2017
(73) Proprietor: Baidu Online Network Technology Beijing Co., Ltd., Beijing 100085 (CN)
(72) Inventor: LIU, Wenyang, Beijing, Beijing 100085 (CN); GAO, Chang, Beijing, Beijing 100085 (CN)
(74) Representative: dompatent von Kreisler Selting Werner - Partnerschaft von Patent- und Rechtsanwälten mbB

(56) References cited:
- CN-A- 104 023 029
- US-A1- 2012 246 737
- US-B1- 8 542 251

## Description

The present application claims the priority of Chinese Patent Application No. 201610292900.7, filed on May 5, 2016, with the title of "Verification method and apparatus for distinguishing man from machine".

### Field of the Disclosure

The present disclosure relates to a verification method and apparatus for distinguishing a man from machine, and particularly to a verification method and apparatus for distinguishing a man from a machine by using a slide verification code.

### Background of the Disclosure

As mobile Internet technologies develop, people's habit of surfing the Internet has changed greatly. The time spent by people in using the Internet on a mobile device has already by far exceeded the time spent on a PC.

However, currently a verification code for judging whether a man or a machine is performing current operation stays at a PC era. Its operation manner has already seriously failed to conform to the use habit of the mobile device and mainly comprises two types: one type is allowing the user to input text content, and this manner is complicated in operation and does not conform to the operation habit of the mobile device. The other manner is allowing the user to select designated content from options, and this manner still cannot completely adapt for the mobile terminal and can be easily cracked in an exhaustive manner. Document US 2012/246737 shows a method for distinguishing a human from a machine.

### Summary of the Disclosure

One of objectives of the present disclosure is to provide a verification method and apparatus for distinguishing a man from a machine. The verification method and apparatus for distinguishing a man from a machine according to the present disclosure employ a slide manner in place of a conventional text input manner or a manner of selecting designated content, to more conform to a habit of using a mobile device.

To implement one of the above objectives of the present disclosure, an embodiment of the present disclosure provides a verification method for distinguishing a man from a machine, comprising:
S1: receiving trajectory information input by a terminal;
S2: comparing the trajectory information with a preset trajectory;
S3: judging whether verification passes at least from dimensionality of a comparison result of the trajectory information and the preset trajectory.

As a further improvement of the embodiment of the present disclosure, step S3 specifically comprises:
judging whether a deviation of the trajectory information from the preset trajectory is within a preset permissible range, and judging that the verification passes if the deviation of the trajectory information from the preset trajectory is within the preset permissible range.

As a further improvement of the embodiment of the present disclosure, step S3 specifically comprises:
judging whether time of the terminal inputting the trajectory information is within a prescribed time period, and whether the deviation of the trajectory information from the preset trajectory is within a preset permissible range; and
judging successful pass of the verification if the time of the terminal inputting the trajectory information is within a prescribed time period, and the deviation of the trajectory information from the preset trajectory is within a preset permissible range.

As a further improvement of the embodiment of the present disclosure, the preset trajectory is generated randomly, and is a bent line consisting of at least two line segments.

As a further improvement of the embodiment of the present disclosure, the step of "comparing the trajectory information with a preset trajectory" specifically comprises:
receiving multi-sampling point information once at an interval of a predetermined cycle during input of the trajectory information by the terminal, and comparing the trajectory information with the preset trajectory according to coordinates of multiple sampling points on a verification interface.

As a further improvement of the embodiment of the present disclosure, the step "judging whether the deviation of the trajectory information from the preset trajectory is within a preset permissible range" specifically comprises:
calculating a first distance between a first sampling point in the trajectory information and a corresponding initial end point in the preset trajectory, and judging whether the first distance exceeds a preset first threshold;
calculating a second distance between last sampling point in the trajectory information and a corresponding last end point in the preset trajectory, and judging whether the second distance exceeds a preset second threshold;
calculating a third distance between any sampling point between the initial end point and the last end point in the trajectory information and the preset trajectory, and judging whether the third distance exceeds a preset third threshold;
if the respective distances calculated above all fail to exceed respective preset thresholds, the deviation of the trajectory information from the preset trajectory is within a preset permissible range, otherwise the deviation of the trajectory information from the preset trajectory is not in a preset permissible range.

As a further improvement of the embodiment of the present disclosure, the step "judging whether time of the terminal inputting the trajectory information is within a prescribed time period" comprises:
receiving multi-sampling point information once at an interval of a predetermined cycle during input of the trajectory information by the terminal,
if the number of the sampling points exceeds a preset number of sampling points, the time of the terminal inputting the trajectory information is not within the prescribed time period;
if the number of the sampling points does not exceed the preset number of sampling points, the time of the terminal inputting the trajectory information is within the prescribed time period.

As a further improvement of the embodiment of the present disclosure, the method further comprises:
generating at least three random points on the verification interface and connecting all random points in turn as a preset trajectory to form a verification code;
sending the verification code to the terminal for display.

As a further improvement of the embodiment of the present disclosure, before "forming the verification code", the method further comprises:
putting a starting point icon to a certain end point of the preset trajectory as an initial end point of the preset trajectory.

As a further improvement of the embodiment of the present disclosure, before "forming the verification code", the method further comprises:
randomly generating at least one interference line on the verification interface, the interference line having a trajectory different from the preset trajectory.

To implement one of the above objectives of the present disclosure, an embodiment of the present disclosure provides a verification apparatus for distinguishing a man from a machine, comprising:
a communication module configured to receive trajectory information input by a terminal;
a verification module configured to compare the trajectory information with a preset trajectory, and judge whether verification passes at least from dimensionality of a comparison result of the trajectory information and the preset trajectory.

As a further improvement of the embodiment of the present disclosure, the verification module is configured to:
judge whether a deviation of the trajectory information from the preset trajectory is within a preset permissible range, and judge that the verification passes if the deviation of the trajectory information from the preset trajectory is within the preset permissible range.

As a further improvement of the embodiment of the present disclosure, the verification module is configured to:
judge whether time of the terminal inputting the trajectory information is within a prescribed time period, and judge whether the deviation of the trajectory information from the preset trajectory is within a preset permissible range; and
judge successful pass of the verification if the time of the terminal inputting the trajectory information is within a prescribed time period, and the deviation of the trajectory information from the preset trajectory is within a preset permissible range.

As a further improvement of the embodiment of the present disclosure, the preset trajectory is generated randomly, and is a bent line consisting of at least two line segments.

As a further improvement of the embodiment of the present disclosure, the communication module is further configured to: receive multi-sampling point information once at an interval of a predetermined cycle during input of the trajectory information by the terminal;
the verification module is configured to compare the trajectory information with the preset trajectory according to coordinates of multiple sampling points on a verification interface.

As a further improvement of the embodiment of the present disclosure, the verification module is configured to:
calculate a first distance between a first sampling point in the trajectory information and a corresponding initial end point in the preset trajectory, and judge whether the first distance exceeds a preset first threshold;
calculate a second distance between last sampling point in the trajectory information and a corresponding last end point in the preset trajectory, and judge whether the second distance exceeds a preset second threshold;
calculate a third distance between any sampling point between the initial end point and the last end point in the trajectory information and the preset trajectory, and judge whether the third distance exceeds a preset third threshold;
if the respective distances calculated above all fail to exceed respective preset thresholds, the deviation of the trajectory information from the preset trajectory is within a preset permissible range, otherwise the deviation of the trajectory information from the preset trajectory is not in a preset permissible range.

As a further improvement of the embodiment of the present disclosure, the communication module is further configured to: receive multi-sampling point information once at an interval of a predetermined cycle during input of the trajectory information by the terminal,
the verification module is configured to: if the number of the sampling points exceeds a preset number of sampling points, the time of the terminal inputting the trajectory information is not within the prescribed time period; if the number of the sampling points does not exceed the preset number of sampling points, the time of the terminal inputting the trajectory information is within the prescribed time period.

As a further improvement of the embodiment of the present disclosure, the apparatus further comprises a verification code building module configured to:
generate at least three random points on the verification interface and connect all random points in turn as a preset trajectory to form a verification code;
the communication module is further configured to send the verification code to the terminal for display.

As a further improvement of the embodiment of the present disclosure, the verification code building module is configured to:
put a starting point icon to a certain end point of the preset trajectory as an initial end point of the preset trajectory.

As a further improvement of the embodiment of the present disclosure, the verification code building module is configured to:
randomly generate at least one interference line on the verification interface, the interference line having a trajectory different from the preset trajectory.

As compared with the prior art, the verification method and apparatus for distinguishing a man from a machine in the present disclosure may recognize user identity through simpler operation, and particularly applied to the mobile device, may bring about better user experience, and meanwhile exhibit very high security and difficulty in cracking the machine.

### Brief Description of Drawings

Fig. 1 is a diagram of system architecture of a verification method and apparatus for distinguishing a man from a machine in an embodiment of the present disclosure;
Fig. 2 is a flow chart of a verification method for distinguishing a man from a machine in the present disclosure;
Fig. 3 is a flow chart of a verification method for distinguishing a man from a machine in a first embodiment of the present disclosure;
Fig. 4a is a schematic diagram of a verification interface in an example of the present disclosure;
Fig. 4b is a schematic diagram of a verification interface in another example of the present disclosure;
Fig. 5 is a flow chart of a verification method for distinguishing a man from a machine in a second embodiment of the present disclosure;
Fig. 6 is a block diagram of a verification apparatus for distinguishing a man from a machine in the present disclosure.

### Detailed Description of Preferred Embodiments

The present disclosure will be described in detail in conjunction with figures and specific embodiments to make objectives, technical solutions and advantages of the present disclosure more apparent.

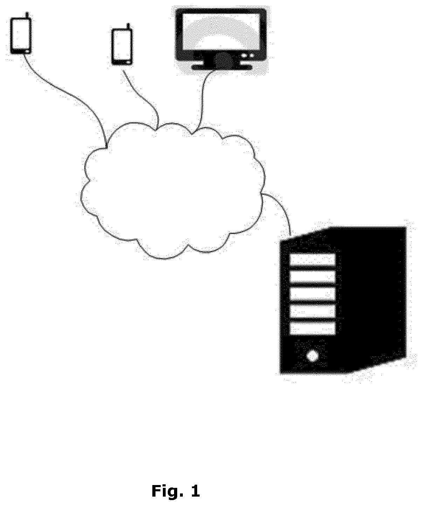

As shown in Fig. 1, a system of the verification method and apparatus for distinguishing a man from a machine in the present disclosure comprises a terminal (e.g., a mobile device, PC or the like) and a server. Both the terminal and the server may interact information via a network. A main purpose of the verification is to distinguish whether a man or a machine inputs a verification code on the terminal. Generally, like other verifications for distinguishing a man from a machine, this verification aims to provide a threshold and avoid a machine from operating the terminal. An original intention of the design of this type of verification is: in the case of successful pass of the verification, a man is operating the terminal.

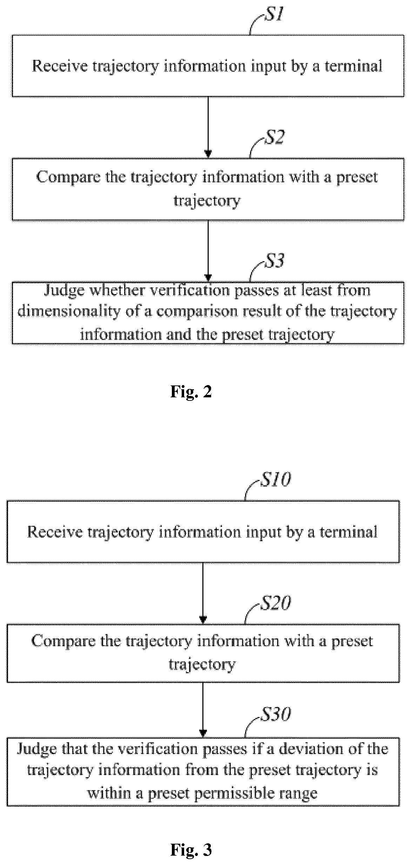

As shown in Fig. 2, the verification method for distinguishing a man from a machine according to the present disclosure comprises:
S1: receiving trajectory information input by a terminal;
S2: comparing the trajectory information with a preset trajectory;
S3: judging whether verification passes at least from dimensionality of a comparison result of the trajectory information and the preset trajectory.

Specifically, this will be described in detail through the following two embodiments:
The first embodiment:
As shown in Fig. 3, the verification method for distinguishing a man from a machine comprises:
S10: receiving trajectory information input by a terminal;
S20: comparing the trajectory information with a preset trajectory;
S30: judging that the verification passes if a deviation of the trajectory information from the preset trajectory is within a preset permissible range.

In the present embodiment, the trajectory information is input by a man or machine to the terminal. After the terminal receives the input trajectory information, it may transmit the trajectory information to the server through a network. The server may judge whether the verification passes according to the trajectory information.

The verification method and apparatus for distinguishing a man from a machine in the present disclosure may be used for the mobile device and the PC. The trajectory information may be input at the terminal via a mouse or an operation such as touch. When the terminal has a touch screen, the trajectory information is touch slide information displayed by the terminal on the verification interface. The mobile terminal is mainly taken as an example for detailed illustration.

Furthermore, to enhance accuracy of the verification and avoid cracking of the machine, in the present embodiment, the preset trajectory is a bent line consisting of at least two line segments, that is, the preset trajectory comprises a starting point, a finishing point, and at least one intermediate point between the starting point and the finishing point. The preset trajectory is a trajectory connecting these points together. Generally, the preset trajectory involved by each verification is generated randomly to further avoid the cracking of the machine.

Furthermore, in the present embodiment, the step of "comparing the trajectory information with a preset trajectory" specifically comprises:
receiving multi-sampling point information once at an interval of a predetermined cycle (e.g., 0.1 seconds) during input of the trajectory information by the terminal, and comparing the trajectory information with the preset trajectory according to coordinates of multiple sampling points on a verification interface.

Specifically, it is feasible to performing verification through the sampling points in the present embodiment. Performing verification through the sampling points specifically comprises:
calculating a first distance between a first sampling point in the trajectory information and a corresponding initial end point in the preset trajectory, and judging whether the first distance exceeds a preset first threshold;
calculating a second distance between last sampling point in the trajectory information and a corresponding last end point in the preset trajectory, and judging whether the second distance exceeds a preset second threshold;
calculating a third distance between any sampling point between the initial end point and the last end point in the trajectory information and the preset trajectory, and judging whether the third distance exceeds a preset third threshold;
if the respective distances calculated above all fail to exceed respective preset thresholds, the deviation of the trajectory information from the preset trajectory is within a preset permissible range, otherwise the deviation of the trajectory information from the preset trajectory is not within a preset permissible range.

Wherein, the first threshold, the second threshold and the third threshold may be set as different distances or the same distance. The exceeding may be set as meaning greater than or equal to, or may be set as meaning greater than; not exceeding may be set as meaning smaller than or equal to, or may be set as meaning smaller than. One of two end points of the above bent line is the initial end point, namely the starting point; the other of the two end points of the above bent line is the last end point, namely, the finishing point. The first sampling point is the sampling point where sampling of the first time is performed during input of the preset trajectory, and the last sampling point is a sampling point where sampling of final time is performed during input of the preset trajectory.

Furthermore, in the present embodiment, the method further comprises:
generating at least three random points on the verification interface and connecting all random points in turn as a preset trajectory to form a verification code;
sending the verification code to the terminal for display.

Specifically, in the present embodiment, it is feasible to form the verification code through the server, the verification code comprising a verification interface, and verify content in the verification interface. As stated above, the preset trajectory is displayed on the verification interface. Certainly, after the random points are generated, the server may store the random points, or random points and preset trajectory (a sole identifier may be marked for a set of random points to facilitate subsequent confirmation of a correspondence relationship) to facilitate subsequent comparison with the input trajectory information.

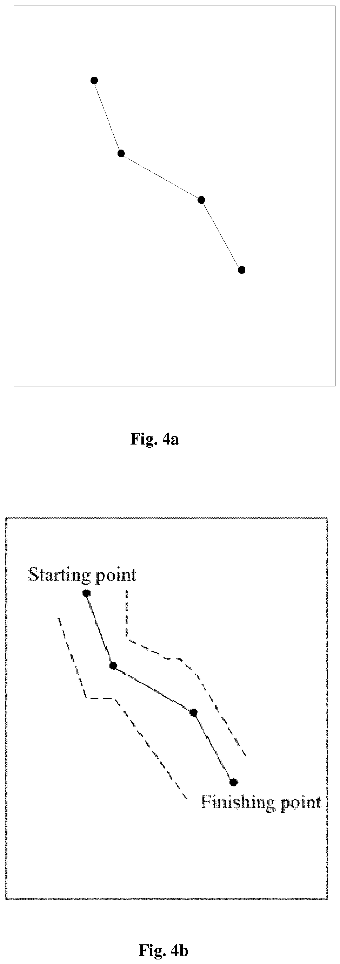

In an example shown in Fig. 4a, four random points are randomly generated on the verification interface, and the four random points are connected in turn to form the preset trajectory. One of two end points of the present trajectory may be the starting point, and the other may be the finishing point. Any one of the starting point and finishing point may be selected when the trajectory information is input on the terminal.

Furthermore, in the present embodiment, before "forming the verification code", the method further comprises:
putting a starting point icon to a certain end point of the preset trajectory as an initial end point of the preset trajectory; and/or putting a finishing point icon to a certain end point or another end point of the preset trajectory, as last end point of the preset trajectory. In another example shown in Fig. 4b, the present example differs from the above example in specifying the starting point and the finishing point. As such, it is feasible to prompt from which end point the trajectory information begins to be input, and consider the initial end point and last end point upon subsequent verification.

Furthermore, in the present embodiment, before "forming the verification code", the method further comprises:
randomly generating at least one interference line on the verification interface, the interference line having a trajectory different from the preset trajectory.

As shown in Fig. 4b, to prevent the machine from identifying the preset trajectory, at least one interference line is further generated on the verification interface to further avoid the cracking of the machine.

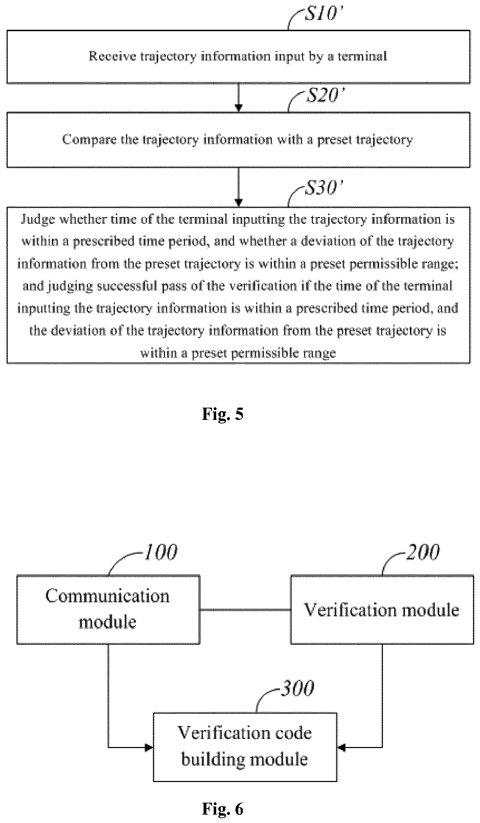

The second embodiment:
As shown in Fig. 5, the verification method for distinguishing a man from a machine comprises:
S10': receiving trajectory information input by a terminal;
S20': comparing the trajectory information with a preset trajectory;
S30': judging whether time of the terminal inputting the trajectory information is within a prescribed time period, and whether a deviation of the trajectory information from the preset trajectory is within a preset permissible range; and judging successful pass of the verification if the time of the terminal inputting the trajectory information is within a prescribed time period, and the deviation of the trajectory information from the preset trajectory is within a preset permissible range.

The present embodiment differs from the above embodiment in that the present embodiment considers whether the verification passes from a matching degree of the trajectory information as well as from time dimensionality.

In the present embodiment, the trajectory information is input by a man or machine to the terminal. After the terminal receives the input trajectory information, it may transmit the trajectory information to the server through a network. The server may judge whether the verification passes according to the trajectory information.

The verification method and apparatus for distinguishing a man from a machine in the present disclosure may be used for the mobile device and the PC. The trajectory information may be input at the terminal via a mouse or an operation such as touch. When the terminal has a touch screen, the trajectory information is touch slide information displayed by the terminal on the verification interface. The mobile terminal is mainly taken as an example for detailed illustration.

Furthermore, to enhance accuracy of the verification and avoid cracking of the machine, in the present embodiment, the preset trajectory is a bent line consisting of at least two line segments, that is, the preset trajectory comprises a starting point, a finishing point, and at least one intermediate point between the starting point and the finishing point. The preset trajectory is a trajectory connecting these points together. Generally, the preset trajectory involved by each verification is generated randomly to further avoid the cracking of the machine.

Specifically, the input time may be obtained by recording time of trajectory information operation, or may be obtained by calculating. In the present embodiment, it is feasible to calculate whether the input time meets requirements through sampling point information. Specifically, the step "judging whether time of the terminal inputting the trajectory information is within a prescribed time period" comprises:
receiving multi-sampling point information once at an interval of a predetermined cycle (e.g., 0.1 seconds) during input of the trajectory information by the terminal;
if the number of the sampling points exceeds a preset number of sampling points, the time of the terminal inputting the trajectory information is not within a prescribed time period;
if the number of the sampling points does not exceed a preset number of sampling points, the time of the terminal inputting the trajectory information is within a prescribed time period;

Furthermore, in the present embodiment, judging whether a deviation of the trajectory information from the preset trajectory is within a preset permissible range specifically comprises:
calculating a first distance between a first sampling point in the trajectory information and a corresponding initial end point in the preset trajectory, and judging whether the first distance exceeds a preset first threshold;
calculating a second distance between last sampling point in the trajectory information and a corresponding last end point in the preset trajectory, and judging whether the second distance exceeds a preset second threshold;
calculating a third distance between any sampling point between the initial end point and the last end point in the trajectory information and the preset trajectory, and judging whether the third distance exceeds a preset third threshold;
if the respective distances calculated above all fail to exceed respective preset thresholds, the deviation of the trajectory information from the preset trajectory is within a preset permissible range, otherwise the deviation of the trajectory information from the preset trajectory is not within a preset permissible range.

Wherein, the first threshold, the second threshold and the third threshold may be set as different distances or the same distance. The exceeding may be set as meaning greater than or equal to, or may be set as meaning greater than; not exceeding may be set as meaning smaller than or equal to, or may be set as meaning smaller than. One of two end points of the above bent line is the initial end point, namely the starting point; the other of the two end points of the above bent line is the last end point, namely, the finishing point. The first sampling point is the sampling point where sampling of the first time is performed during input of the preset trajectory, and the last sampling point is a sampling point where sampling of final time is performed during input of the preset trajectory.

Furthermore, in the present embodiment, the method further comprises:
generating at least three random points on the verification interface and connecting all random points in turn as a preset trajectory to form a verification code;
sending the verification code to the terminal for display.

Specifically, in the present embodiment, it is feasible to form the verification code through the server, the verification code comprising a verification intcrfacc, and verify content in the verification interface. As stated above, the preset trajectory is displayed on the verification interface. Certainly, after the random points are generated, the server may store the random points, or random points and preset trajectory (a sole identifier may be marked for a set of random points to facilitate subsequent confirmation of a correspondence relationship) to facilitate subsequent comparison with the input trajectory information.

In an example shown in Fig. 4a, four random points are randomly generated on the verification interface, and the four random points are connected in turn to form the preset trajectory. One of two end points of the present trajectory may be the starting point, and the other may be the finishing point. Any one of the starting point and finishing point may be selected when the trajectory information is input on the terminal.

Furthermore, in the present embodiment, before "forming the verification code", the method further comprises:
putting a starting point icon to a certain end point of the preset trajectory as an initial end point of the preset trajectory; and/or putting a finishing point icon to a certain end point or another end point of the preset trajectory, as last end point of the preset trajectory. In another example shown in Fig. 4b, the present example differs from the above example in specifying the starting point and the finishing point. As such, it is feasible to prompt from which end point the trajectory information begins to be input, and consider the initial end point and last end point upon subsequent verification.

Furthermore, in the present embodiment, before "forming the verification code", the method further comprises:
randomly generating at least one interference line on the verification interface, the interference line having a trajectory different from the preset trajectory.

As shown in Fig. 4b, to prevent the machine from identifying the preset trajectory, at least one interference line is further generated on the verification interface to further avoid the cracking of the machine.

As shown in Fig. 6, the verification apparatus for distinguishing a man from a machine according to an embodiment of the present disclosure comprises:
a communication module 100 configured to receive trajectory information input by a terminal;
a verification module 200 configured to compare the trajectory information with a preset trajectory; and judge whether verification passes at least from dimensionality of a comparison result of the trajectory information and the preset trajectory.

Specifically, this will be described in detail through the following two embodiments:
In the first embodiment, the verification apparatus for distinguishing a man from a machine comprises:
a communication module 100 configured to receive trajectory information input by a terminal;
a verification module 200 configured to compare the trajectory information with a preset trajectory, and judge that the verification passes if a deviation of the trajectory information from the preset trajectory is within a preset permissible range.

In the present embodiment, the trajectory information is input by a man or machine to the terminal. After the terminal receives the input trajectory information, it may transmit the trajectory information to the server through a network. The server may judge whether the verification passes according to the trajectory information.

The verification method and apparatus for distinguishing a man from a machine in the present disclosure may be used for the mobile device and the PC. The trajectory information may be input at the terminal via a mouse or an operation such as touch. When the terminal has a touch screen, the trajectory information is touch slide information displayed by the terminal on the verification interface. The mobile terminal is mainly taken as an example for detailed illustration.

Furthermore, to enhance accuracy of the verification and avoid cracking of the machine, in the present embodiment, the preset trajectory is a bent line consisting of at least two line segments, that is, the preset trajectory comprises a starting point, a finishing point, and at least one intermediate point between the starting point and the finishing point. The preset trajectory is a trajectory connecting these points together. Generally, the preset trajectory involved by each verification is generated randomly to further avoid the cracking of the machine.

Furthermore, in the present embodiment, the communication module 100 is further configured to receive multi-sampling point information once at an interval of a predetermined cycle (e.g., 0.1 seconds) during input of the trajectory information by the terminal;
the verification module 200 is configured to compare the trajectory information with the preset trajectory according to coordinates of multiple sampling points on a verification interface.

Specifically, it is feasible to perform verification through the sampling points in the present embodiment. The verification module 200 is configured to:
calculate a first distance between a first sampling point in the trajectory information and a corresponding initial end point in the preset trajectory, and judge whether the first distance exceeds a preset first threshold;
calculate a second distance between last sampling point in the trajectory information and a corresponding last end point in the preset trajectory, and judge whether the second distance exceeds a preset second threshold;
calculate a third distance between any sampling point between the initial end point and the last end point in the trajectory information and the preset trajectory, and judge whether the third distance exceeds a preset third threshold;
if the respective distances calculated above all fail to exceed respective preset thresholds, the deviation of the trajectory information from the preset trajectory is within a preset permissible range, otherwise the deviation of the trajectory information from the preset trajectory is not within a preset permissible range.

Wherein, the first threshold, the second threshold and the third threshold may be set as different distances or the same distance. The exceeding may be set as meaning greater than or equal to, or may be set as meaning greater than; not exceeding may be set as meaning smaller than or equal to, or may be set as meaning smaller than. One of two end points of the above bent line is the initial end point, namely the starting point; the other of the two end points of the above bent line is the last end point, namely, the finishing point. The first sampling point is the sampling point where sampling of the first time is performed during input of the preset trajectory, and the last sampling point is a sampling point where sampling of final time is performed during input of the preset trajectory.

Furthermore, in the present embodiment, the apparatus further comprises a verification code building module 300 configured to:
generate at least three random points on the verification interface and connect all random points in turn as a preset trajectory to form a verification code;
the communication module 100 is further configured to send the verification code to the terminal for display.

Specifically, in the present embodiment, it is feasible to form the verification code through the server, the verification code comprising a verification interface, and verify content in the verification interface. As stated above, the preset trajectory is displayed on the verification interface. Certainly, after the random points are generated, the server may store the random points, or random points and preset trajectory (a sole identifier may be marked for a set of random points to facilitate subsequent confirmation of a correspondence relationship) to facilitate subsequent comparison with the input trajectory information.

In an example shown in Fig. 4a, four random points are randomly generated on the verification interface, and the four random points are connected in turn to form the preset trajectory. One of two end points of the present trajectory may be the starting point, and the other may be the finishing point. Any one of the starting point and finishing point may be selected when the trajectory information is input on the terminal.

Furthermore, in the present embodiment, the verification code building module 300 is further configured to:
put a starting point icon to a certain end point of the preset trajectory as an initial end point of the preset trajectory; and/or put a finishing point icon to a certain end point or another end point of the preset trajectory, as last end point of the preset trajectory. In another example shown in Fig. 4b, the present example differs from the above example in specifying the starting point and the finishing point. As such, it is feasible to prompt from which end point the trajectory information begins to be input, and consider the initial end point and last end point upon subsequent verification.

Furthermore, in the present embodiment, the verification code building module 300 is further configured to:
randomly generate at least one interference line on the verification interface, the interference line having a trajectory different from the preset trajectory.

As shown in Fig. 4b, to prevent the machine from identifying the preset trajectory, at least one interference line is further generated on the verification interface to further avoid the cracking of the machine.

In the second embodiment, the verification apparatus for distinguishing a man from a machine comprises:
a communication module 100 configured to receive trajectory information input by a terminal;
a verification module 200 configured to judge whether time of the terminal inputting the trajectory information is within a prescribed time period, and whether a deviation of the trajectory information from the preset trajectory is within a preset permissible range;
and judge successful pass of the verification if the time of the terminal inputting the trajectory information is within a prescribed time period, and the deviation of the trajectory information from the preset trajectory is within a preset permissible range.

The present embodiment differs from the above embodiment in that the present embodiment considers whether the verification passes from a matching degree of the trajectory information as well as from time dimensionality.

In the present embodiment, the trajectory information is input by a man or machine to the terminal. After the terminal receives the input trajectory information, it may transmit the trajectory information to the server through a network. The server may judge whether the verification passes according to the trajectory information.

The verification method and apparatus for distinguishing a man from a machine in the present disclosure may be used for the mobile device and the PC. The trajectory information may be input at the terminal via a mouse or an operation such as touch. When the terminal has a touch screen, the trajectory information is touch slide information displayed by the terminal on the verification interface. The mobile terminal is mainly taken as an example for detailed illustration.

Furthermore, to enhance accuracy of the verification and avoid cracking of the machine, in the present embodiment, the preset trajectory is a bent line consisting of at least two line segments, that is, the preset trajectory comprises a starting point, a finishing point, and at least one intermediate point between the starting point and the finishing point. The preset trajectory is a trajectory connecting these points together. Generally, the preset trajectory involved by each verification is generated randomly to further avoid the cracking of the machine.

Specifically, the input time may be obtained by recording time of trajectory information operation, or may be obtained by calculating. In the present embodiment, it is feasible to calculate whether the input time meets requirements through sampling point information. Specifically,
the communication module 100 is further configured to receive multi-sampling point information once at an interval of a predetermined cycle (e.g., 0.1 seconds) during input of the trajectory information by the terminal;
the verification module 200 is configured in a way that if the number of the sampling points exceeds a preset number of sampling points, the time of the terminal inputting the trajectory information is not within a prescribed time period;
if the number of the sampling points does not exceed a preset number of sampling points, the time of the terminal inputting the trajectory information is within a prescribed time period.

Furthermore, in the present embodiment, judgement is made as to whether a deviation of the trajectory information from the preset trajectory is within a preset permissible range. The verification module 200 is configured to:
calculate a first distance between a first sampling point in the trajectory information and a corresponding initial end point in the preset trajectory, and judge whether the first distance exceeds a preset first threshold;
calculate a second distance between last sampling point in the trajectory information and a corresponding last end point in the preset trajectory, and judge whether the second distance exceeds a preset second threshold;
calculate a third distance between any sampling point between the initial end point and the last end point in the trajectory information and the preset trajectory, and judge whether the third distance exceeds a preset third threshold;
if the respective distances calculated above all fail to exceed respective preset thresholds, the deviation of the trajectory information from the preset trajectory is within a preset permissible range, otherwise the deviation of the trajectory information from the preset trajectory is not within a preset permissible range.

Wherein, the first threshold, the second threshold and the third threshold may be set as different distances or the same distance. The exceeding may be set as meaning greater than or equal to, or may be set as meaning greater than; not exceeding may be set as meaning smaller than or equal to, or may be set as meaning smaller than. One of two end points of the above bent line is the initial end point, namely the starting point; the other of the two end points of the above bent line is the last end point, namely, the finishing point. The first sampling point is the sampling point where sampling of the first time is performed during input of the preset trajectory, and the last sampling point is a sampling point where sampling of final time is performed during input of the preset trajectory.

Furthermore, in the present embodiment, the apparatus further comprises a verification code building module 300 configured to:
generate at least three random points on the verification interface and connect all random points in turn as a preset trajectory to form a verification code;
the communication module 100 is further configured to send the verification code to the terminal for display.

Specifically, in the present embodiment, it is feasible to form the verification code through the server, the verification code comprising a verification interface, and verify content in the verification interface. As stated above, the preset trajectory is displayed on the verification intcrfacc. Certainly, after the random points arc generated, the server may store the random points, or random points and preset trajectory (a sole identifier may be marked for a set of random points to facilitate subsequent confirmation of a correspondence relationship) to facilitate subsequent comparison with the input trajectory information.

In an example shown in Fig. 4a, four random points are randomly generated on the verification interface, and the four random points are connected in turn to form the preset trajectory. One of two end points of the present trajectory may be the starting point, and the other may be the finishing point. Any one of the starting point and finishing point may be selected when the trajectory information is input on the terminal.

Furthermore, in the present embodiment, the verification code building module 300 is further configured to:
put a starting point icon to a certain end point of the preset trajectory as an initial end point of the preset trajectory; and/or put a finishing point icon to a certain end point or another end point of the preset trajectory, as last end point of the preset trajectory. In another example shown in Fig. 4b, the present example differs from the above example in specifying the starting point and the finishing point. As such, it is feasible to prompt from which end point the trajectory information begins to be input, and consider the initial end point and last end point upon subsequent verification.

Furthermore, in the present embodiment, the verification code building module 300 is further configured to:
randomly generating at least one interference line on the verification interface, the interference line having a trajectory different from the preset trajectory.

As shown in Fig. 4b, to prevent the machine from identifying the preset trajectory, at least one interference line is further generated on the verification interface to further avoid the cracking of the machine.

To conclude, the verification method and apparatus for distinguishing a man from a machine in the present disclosure may recognize user identity through simpler operation, and particularly applied to the mobile device, may bring about better user experience, and meanwhile exhibit very high security and difficulty in cracking the machine.

Those skilled in the art can clearly understand that for purpose of convenience and brevity of depictions, reference may be made to corresponding procedures in the aforesaid method embodiments for specific operation procedures of the system, apparatus and modules described above, which will not be detailed any more.

In the embodiments provided by the present disclosure, it should be understood that the revealed system, apparatus and method can be implemented through other ways. For example, the above-described embodiments for the apparatus are only exemplary, e.g., the division of the modules is merely logical one, and, in reality, they can be divided in other ways upon embodiment. For example, a plurality of modules or components may be combined or integrated into another system, or some features may be neglected or not executed. In addition, mutual coupling or direct coupling or communicative connection as displayed or discussed may be indirect coupling or communicative connection performed via some interfaces, means or modules and may be electrical, mechanical or in other forms.

The modules described as separate parts may be or may not be physically separated, the parts shown as modules may be or may not be physical modules, i.e., they can be located in one place, or distributed in a plurality of network modules. One can select some or all the modules to achieve the purpose of the embodiment according to the actual needs.

Further, in the embodiments of the present disclosure, functional modules can be integrated in one processing module, or they can be separate physical presences; or two or more modules can be integrated in one module. The integrated module described above can be implemented in the form of hardware, or they can be implemented with hardware plus software functional modules.

The aforementioned integrated module in the form of software function modules may be stored in a computer readable storage medium. The aforementioned software function modules are stored in a storage medium, including several instructions to instruct a computer device (a personal computer, server, or network equipment, etc.) or processor to perform some steps of the method described in the various embodiments of the present disclosure. The aforementioned storage medium includes various media that may store program codes, such as U disk, removable hard disk, read-only memory (ROM), a random access memory (RAM), magnetic disk, or an optical disk.

What are stated above are only preferred embodiments of the present disclosure, not intended to limit the disclosure. Any modifications, equivalent replacements, improvements and the like made within the scope of the present disclosure, should all be included in the present disclosure within the scope of protection.

## Claims

1. A verification method for distinguishing a man from a machine, comprising:
generating at least three random points on a verification interface and connecting all random points in turn with straight line segments as a preset trajectory;
displaying the preset trajectory on the verification interface and specifying a starting point and a finishing point;
S1: receiving trajectory information input by a terminal;
S2: comparing the trajectory information with the preset trajectory;
S3: judging whether verification passes at least from dimensionality of a comparison result of the trajectory information and the preset trajectory,
wherein the preset trajectory is generated randomly, and is a bent line consisting of at least two line segments.

2. The verification method for distinguishing a man from a machine according to claim 1, wherein the step S3 specifically comprises:
judging whether a deviation of the trajectory information from the preset trajectory is within a preset permissible range, and judging that the verification passes if the deviation of the trajectory information from the preset trajectory is within the preset permissible range; or
judging whether time of the terminal inputting the trajectory information is within a prescribed time period, and judging whether the deviation of the trajectory information from the preset trajectory is within a preset permissible range, and judging successful pass of the verification if the time of the terminal inputting the trajectory information is within a prescribed time period, and the deviation of the trajectory information from the preset trajectory is within a preset permissible range.

3. The verification method for distinguishing a man from a machine according to claim 1, wherein the step of "comparing the trajectory information with a preset trajectory" specifically comprises:
receiving multi-sampling point information once at an interval of a predetermined cycle during input of the trajectory information by the terminal, and comparing the trajectory information with the preset trajectory according to coordinates of multiple sampling points on the verification interface.

4. The verification method for distinguishing a man from a machine according to claim 2, wherein the step "judging whether the deviation of the trajectory information from the preset trajectory is within a preset permissible range" specifically comprises:
calculating a first distance between a first sampling point in the trajectory information and a corresponding initial end point in the preset trajectory, and judging whether the first distance exceeds a preset first threshold;
calculating a second distance between a last sampling point in the trajectory information and a corresponding last end point in the preset trajectory, and judging whether the second distance exceeds a preset second threshold;
calculating a third distance between any sampling point between the initial end point and the last end point in the trajectory information and the preset trajectory, and judging whether the third distance exceeds a preset third threshold;
if the respective distances calculated above all fail to exceed respective preset thresholds, the deviation of the trajectory information from the preset trajectory is within a preset permissible range, otherwise the deviation of the trajectory information from the preset trajectory is not in a preset permissible range.

5. The verification method for distinguishing a man from a machine according to claim 2, wherein the step "judging whether time of the terminal inputting the trajectory information is within a prescribed time period" specifically comprises:
receiving multi-sampling point information once at an interval of a predetermined cycle during input of the trajectory information by the terminal,
if the number of the sampling points exceeds a preset number of sampling points, the time of the terminal inputting the trajectory information is not within the prescribed time period;
if the number of the sampling points does not exceed the preset number of sampling points, the time of the terminal inputting the trajectory information is within the prescribed time period.

6. The verification method for distinguishing a man from a machine according to claim 1,
wherein, before "forming a verification code", the method further comprises:
putting a starting point icon to a certain end point of the preset trajectory as an initial end point of the preset trajectory; or
randomly generating at least one interference line on the verification interface, the interference line having a trajectory different from the preset trajectory.

7. A verification apparatus for distinguishing a man from a machine, comprising:
means for generating at least three random points on a verification interface and
connecting all random points in turn with straight line segments as a preset trajectory;
means for displaying the preset trajectory on the verification interface and specifying a starting point and a finishing point;
means for receiving trajectory information input by a terminal;
means for comparing the trajectory information with the preset trajectory, and
means for judging whether verification passes at least from dimensionality of a comparison result of the trajectory information and the preset trajectory,
wherein the preset trajectory is generated randomly, and is a bent line consisting of at least two line segments.

8. The verification apparatus for distinguishing a man from a machine according to claim 7, wherein, the means for judging whether verification passes at least from dimensionality of a comparison result of the trajectory information and the preset trajectory.:
the means for judging whether a deviation of the trajectory information from the preset trajectory is within a preset permissible range, and the means for judging that the verification passes if the deviation of the trajectory information from the preset trajectory is within the preset permissible range; or
the means for judging whether time of the terminal inputting the trajectory information is within a prescribed time period, and the means for judging whether the deviation of the trajectory information from the preset trajectory is within a preset permissible range, and the means for judging successful pass of the verification if the time of the terminal inputting the trajectory information is within a prescribed time period, and the deviation of the trajectory information from the preset trajectory is within a preset permissible range.

9. The verification apparatus for distinguishing a man from a machine according to claim 7, wherein, the means for comparing the trajectory information with a preset trajectory specifically comprises:
the means for receiving multi-sampling point information once at an interval of a predetermined cycle during input of the trajectory information by the terminal;
and the means for comparing the trajectory information with the preset trajectory according to coordinates of multiple sampling points on the verification interface.

10. The verification apparatus for distinguishing a man from a machine according to claim 8, wherein, the means for judging whether the deviation of the trajectory information from the preset trajectory is within a preset permissible range specifically comprises:
the means for calculating a first distance between a first sampling point in the trajectory information and a corresponding initial end point in the preset trajectory, and judging whether the first distance exceeds a preset first threshold;
the means for calculating a second distance between a last sampling point in the trajectory information and a corresponding last end point in the preset trajectory, and judging whether the second distance exceeds a preset second threshold;
the means for calculating a third distance between any sampling point between the initial end point and the last end point in the trajectory information and the preset trajectory, and judging whether the third distance exceeds a preset third threshold;
if the respective distances calculated above all fail to exceed respective preset thresholds, the deviation of the trajectory information from the preset trajectory is within a preset permissible range, otherwise the deviation of the trajectory information from the preset trajectory is not in a preset permissible range.

11. The verification apparatus for distinguishing a man from a machine according to claim 8, wherein, the means for judging whether time of the terminal inputting the trajectory information is within a prescribed time period specifically comprises:
the means for receiving multi-sampling point information once at an interval of a predetermined cycle during input of the trajectory information by the terminal,
if the number of the sampling points exceeds a preset number of sampling points, the time of the terminal inputting the trajectory information is not within the prescribed time period; if the number of the sampling points does not exceed the preset number of sampling points, the time of the terminal inputting the trajectory information is within the prescribed time period.

12. The verification apparatus for distinguishing a man from a machine according to claim 7,
wherein, before the means for forming a verification code, the apparatus further comprises:
the means for putting a starting point icon to a certain end point of the preset trajectory as an initial end point of the preset trajectory; or
randomly generating at least one interference line on the verification interface, the interference line having a trajectory different from the preset trajectory.

13. A non-volatile computer storage medium in which one or more programs are stored, an apparatus being enabled to execute the method of any one of claims 1-6 when said one or more programs are executed by the apparatus.

## Patentansprüche

1. Verifizierungsverfahren zum Unterscheiden zwischen einem Menschen und einer Maschine, das umfasst:
Erzeugen von mindestens drei willkürlichen Punkten auf einer Verifizierungsschnittstelle und Verbinden sämtlicher willkürlicher Punkte mit geraden Liniensegmenten als vorgegebenen Verlauf;
Anzeigen des vorgegebenen Verlaufs auf der Verifizierungsschnittstelle und Spezifizieren eines Startpunkts und eines Schlusspunkts;
S1: Empfangen von von von einem Endgerät eingegebenen Verlaufsinformationen;
S2: Vergleichen der Verlaufsinformationen mit dem vorgegebenen Verlauf;
S3: Beurteilen, ob die Verifizierung bestanden ist, zumindest anhand einer Dimensionalität eines Vergleichsergebnisses der Verlaufsinformationen und des vorgegebenen Verlaufs,
wobei der vorgegebene Verlauf willkürlich erzeugt wird und eine gekrümmte Linie ist, die aus mindestens zwei Liniensegmenten gebildet ist.

2. Verifizierungsverfahren zum Unterscheiden zwischen einem Menschen und einer Maschine nach Anspruch 1, bei dem Schritt S3 spezifisch umfasst:
Beurteilen, ob eine Abweichung der Verlaufsinformationen von dem vorgegebenen Verlauf innerhalb eines vorgegebenen zulässigen Bereichs liegt, und Beurteilen, dass die Verifizierung bestanden ist, wenn die Abweichung der Verlaufsinformationen von dem vorgegebenen Verlauf innerhalb des vorgegebenen zulässigen Bereichs liegt; oder
Beurteilen, ob die Zeit, in der das Endgerät die Verlaufsinformationen eingibt, innerhalb einer vorgegebenen Zeitperiode liegt, und Beurteilen, ob die Abweichung der Verlaufsinformationen von dem vorgegebenen Verlauf innerhalb eines vorgegebenen zulässigen Bereichs liegt, und Beurteilen eines erfolgreichen Bestehens der Verifizierung, wenn die Zeit, in der das Endgerät die Verlaufsinformationen eingibt, innerhalb einer vorgegebenen Zeitperiode liegt und die Abweichung der Verlaufsinformationen von dem vorgegebenen Verlauf innerhalb eines vorgegebenen zulässigen Bereichs liegt.

3. Verifizierungsverfahren zum Unterscheiden zwischen einem Menschen und einer Maschine nach Anspruch 1, bei dem der Schritt des "Vergleichens der Verlaufsinformationen mit einem vorgegebenen Verlauf" spezifisch umfasst:
Empfangen von Mehrfachabtastpunkt-Informationen einmal in einem Intervall eines vorbestimmten Zyklus während der Eingabe von Verlaufsinformationen durch das Endgerät und Vergleichen der Verlaufsinformationen mit dem vorgegebenen Verlauf gemäß Koordinaten von Mehrfachabtastpunkt-Informationen auf der Verifizierungsschnittstelle.

4. Verifizierungsverfahren zum Unterscheiden zwischen einem Menschen und einer Maschine nach Anspruch 2, bei dem der Schritt "Beurteilen, ob die Abweichung der Verlaufsinformationen von dem vorgegebenen Verlauf innerhalb eines vorgegebenen zulässigen Bereichs liegt" spezifisch umfasst:
Berechnen eines ersten Abstands zwischen einem ersten Abtastpunkt in den Verlaufsinformationen und einem entsprechenden Anfangs-Endpunkt in dem vorgegebenen Verlauf und Beurteilen, ob der erste Abstand einen vorgegebenen ersten Schwellwert übersteigt;
Berechnen eines zweiten Abstands zwischen einem letzten Abtastpunkt in den Verlaufsinformationen und einem entsprechenden letzten Endpunkt in dem vorgegebenen Verlauf und Beurteilen, ob der zweite Abstand einen vorgegebenen zweiten Schwellwert übersteigt;
Berechnen eines dritten Abstands zwischen einem beliebigen Abtastpunkt zwischen dem Anfangs-Endpunkt und dem letzten Endpunkt in den Verlaufsinformationen und dem vorgegebenen Verlauf und Beurteilen, ob der dritte Abstand einen vorgegebenen dritten Schwellwert übersteigt;
wenn alle jeweiligen oben berechneten Abstände die jeweiligen vorgegebenen Schwellwerte nicht übersteigen, liegt die Abweichung der Verlaufsinformationen von dem vorgegebenen Verlauf innerhalb eines vorgegebenen zulässigen Bereichs, andernfalls liegt die Abweichung der Verlaufsinformationen von dem vorgegebenen Verlauf nicht innerhalb eines vorgegebenen zulässigen Bereichs.

5. Verifizierungsverfahren zum Unterscheiden zwischen einem Menschen und einer Maschine nach Anspruch 2, bei dem der Schritt des "Beurteilens, ob die Zeit, in der das Endgerät die Verlaufsinformationen eingibt, innerhalb einer vorgegebenen Zeitperiode liegt" spezifisch umfasst:
Empfangen von Mehrfachabtastpunkt-Informationen einmal in einem Intervall eines vorbestimmten Zyklus während der Eingabe von Verlaufsinformationen durch das Endgerät,
wenn die Anzahl der Abtastpunkte eine vorgegebene Anzahl von Abtastpunkten übersteigt, liegt die Zeit, in der das Endgerät die Verlaufsinformationen eingibt, nicht innerhalb der vorgeschriebenen Zeitperiode;
wenn die Anzahl der Abtastpunkte die vorgegebene Anzahl von Abtastpunkten nicht übersteigt, liegt die Zeit, in der das Endgerät die Verlaufsinformationen eingibt, innerhalb der vorgeschriebenen Zeitperiode.

6. Verifizierungsverfahren zum Unterscheiden zwischen einem Menschen und einer Maschine nach Anspruch 1, bei dem
vordem "Erstellen eines Verifizierungscodes" das Verfahren ferner umfasst:
Platzieren eines Startpunkt-Icons an einem bestimmten Endpunkt des vorgegebenen Verlaufs als Anfangs-Endpunkt des vorgegebenen Verlaufs; oder
willkürliches Erzeugen mindestens einer Interferenzlinie auf der Verifizierungsschnittstelle, wobei die Interferenzlinie einen anderen Verlauf als den vorgegebenen Verlauf hat.

7. Verifizierungsvorrichtung zum Unterscheiden zwischen einem Menschen und einer Maschine, die aufweist:
eine Einrichtung zum Erzeugen von mindestens drei willkürlichen Punkten auf einer Verifizierungsschnittstelle und Verbinden sämtlicher willkürlicher Punkte mit geraden Liniensegmenten als vorgegebenen Verlauf;
eine Einrichtung zum Anzeigen des vorgegebenen Verlaufs auf der Verifizierungsschnittstelle und Spezifizieren eines Startpunkts und eines Schlusspunkts;
eine Einrichtung zum Empfangen von von von einem Endgerät eingegebenen Verlaufsinformationen;
eine Einrichtung zum Vergleichen der Verlaufsinformationen mit dem vorgegebenen Verlauf; und
eine Einrichtung zum Beurteilen, ob die Verifizierung bestanden ist, zumindest anhand einer Dimensionalität eines Vergleichsergebnisses der Verlaufsinformationen und des vorgegebenen Verlaufs,
wobei der vorgegebene Verlauf willkürlich erzeugt wird und eine gekrümmte Linie ist, die aus mindestens zwei Liniensegmenten gebildet ist.

8. Verifizierungsvorrichtung zum Unterscheiden zwischen einem Menschen und einer Maschine nach Anspruch 7, bei der die Einrichtung zum Beurteilen, ob die Verifizierung bestanden ist, zumindest anhand einer Dimensionalität eines Vergleichsergebnisses der Verlaufsinformationen und des vorgegebenen Verlaufs:
die Einrichtung zum Beurteilen, ob eine Abweichung der Verlaufsinformationen von dem vorgegebenen Verlauf innerhalb eines vorgegebenen zulässigen Bereichs liegt, und die Einrichtung zum Beurteilen, dass die Verifizierung bestanden ist, wenn die Abweichung der Verlaufsinformationen von dem vorgegebenen Verlauf innerhalb des vorgegebenen zulässigen Bereichs liegt; oder
die Einrichtung zum Beurteilen, ob die Zeit, in der das Endgerät die Verlaufsinformationen eingibt, innerhalb einer vorgegebenen Zeitperiode liegt, und die Einrichtung zum Beurteilen, ob die Abweichung der Verlaufsinformationen von dem vorgegebenen Verlauf innerhalb eines vorgegebenen zulässigen Bereichs liegt, und die Einrichtung zum Beurteilen eines erfolgreichen Bestehens der Verifizierung, wenn die Zeit, in der das Endgerät die Verlaufsinformationen eingibt, innerhalb einer vorgegebenen Zeitperiode liegt und die Abweichung der Verlaufsinformationen von dem vorgegebenen Verlauf innerhalb eines vorgegebenen zulässigen Bereichs liegt.

9. Verifizierungsvorrichtung zum Unterscheiden zwischen einem Menschen und einer Maschine nach Anspruch 7, bei der die Einrichtung zum Vergleichen der Verlaufsinformationen mit einem vorgegebenen Verlauf spezifisch aufweist:
die Einrichtung zum Empfangen von Mehrfachabtastpunkt-Informationen einmal in einem Intervall eines vorbestimmten Zyklus während der Eingabe von Verlaufsinformationen durch das Endgerät;
und die Einrichtung zum Vergleichen der Verlaufsinformationen mit dem vorgegebenen Verlauf gemäß Koordinaten von Mehrfachabtastpunkt-Informationen auf der Verifizierungsschnittstelle.

10. Verifizierungsvorrichtung zum Unterscheiden zwischen einem Menschen und einer Maschine nach Anspruch 8, bei der die Einrichtung zum Beurteilen, ob die Abweichung der Verlaufsinformationen von dem vorgegebenen Verlauf innerhalb eines vorgegebenen zulässigen Bereichs liegt, spezifisch aufweist:
die Einrichtung zum Berechnen eines ersten Abstands zwischen einem ersten Abtastpunkt in den Verlaufsinformationen und einem entsprechenden Anfangs-Endpunkt in dem vorgegebenen Verlauf und Beurteilen, ob der erste Abstand einen vorgegebenen ersten Schwellwert übersteigt;
die Einrichtung zum Berechnen eines zweiten Abstands zwischen einem letzten Abtastpunkt in den Verlaufsinformationen und einem entsprechenden letzten Endpunkt in dem vorgegebenen Verlauf und Beurteilen, ob der zweite Abstand einen vorgegebenen zweiten Schwellwert übersteigt;
die Einrichtung zum Berechnen eines dritten Abstands zwischen einem beliebigen Abtastpunkt zwischen dem Anfangs-Endpunkt und dem letzten Endpunkt in den Verlaufsinformationen und dem vorgegebenen Verlauf und Beurteilen, ob der dritte Abstand einen vorgegebenen dritten Schwellwert übersteigt;
wenn alle jeweiligen oben berechneten Abstände die jeweiligen vorgegebenen Schwellwerte nicht übersteigen, liegt die Abweichung der Verlaufsinformationen von dem vorgegebenen Verlauf innerhalb eines vorgegebenen zulässigen Bereichs, andernfalls liegt die Abweichung der Verlaufsinformationen von dem vorgegebenen Verlauf nicht innerhalb eines vorgegebenen zulässigen Bereichs.

11. Verifizierungsvorrichtung zum Unterscheiden zwischen einem Menschen und einer Maschine nach Anspruch 8, bei der die Einrichtung zum Beurteilen, ob die Zeit, in der das Endgerät die Verlaufsinformationen eingibt, innerhalb einer vorgegebenen Zeitperiode liegt, spezifisch umfasst:
die Einrichtung zum Empfangen von Mehrfachabtastpunkt-Informationen einmal in einem Intervall eines vorbestimmten Zyklus während der Eingabe von Verlaufsinformationen durch das Endgerät,
wenn die Anzahl der Abtastpunkte eine vorgegebene Anzahl von Abtastpunkten übersteigt, liegt die Zeit, in der das Endgerät die Verlaufsinformationen eingibt, nicht innerhalb der vorgeschriebenen Zeitperiode; wenn die Anzahl der Abtastpunkte die vorgegebene Anzahl von Abtastpunkten nicht übersteigt, liegt die Zeit, in der das Endgerät die Verlaufsinformationen eingibt, innerhalb der vorgeschriebenen Zeitperiode.

12. Verifizierungsvorrichtung zum Unterscheiden zwischen einem Menschen und einer Maschine nach Anspruch 7, bei der
vor der Einrichtung zum Erstellen eines Verifizierungscodes die Vorrichtung ferner aufweist:
die Einrichtung zum Platzieren eines Startpunkt-Icons an einem bestimmten Endpunkt des vorgegebenen Verlaufs als Anfangs-Endpunkt des vorgegebenen Verlaufs; oder
willkürliches Erzeugen mindestens einer Interferenzlinie auf der Verifizierungsschnittstelle, wobei die Interferenzlinie einen anderen Verlauf als den vorgegebenen Verlauf hat.

13. Nichtvolatiles Computerspeichermedium, auf dem ein oder mehrere Programme gespeichert sind, wobei eine Vorrichtung in die Lage versetzt wird, das Verfahren nach einem der Ansprüche 1-6 auszuführen, wenn das eine oder die mehreren Programme von der Vorrichtung ausgeführt werden.

## Revendications

1. Procédé de vérification permettant de distinguer un homme d'une machine, comprenant :
la génération au moins de trois points aléatoires sur une interface de vérification et la connexion de tous les points aléatoires tour à tour avec des segments de ligne droite en tant que trajectoire prédéfinie ;
l'affichage de la trajectoire prédéfinie sur l'interface de vérification et la spécification d'un point de départ et d'un point d'arrivée ;
S1 : la réception d'informations de trajectoire entrées par un terminal ;
S2 : la comparaison des informations de trajectoire avec la trajectoire prédéfinie ;
S3 : l'estimation du fait de savoir si la vérification passe au moins par la dimensionnalité d'un résultat de comparaison des informations de trajectoire et la trajectoire prédéfinie,
dans lequel la trajectoire prédéfinie est générée de manière aléatoire, et est une ligne pliée constituée d'au moins deux segments de ligne.

2. Procédé de vérification permettant de distinguer un homme d'une machine selon la revendication 1, dans lequel l'étape S3 comprend spécifiquement :
l'estimation du fait de savoir si un écart des informations de trajectoire par rapport à la trajectoire prédéfinie se situe dans une plage autorisée prédéfinie, et l'estimation du fait que la vérification est réussie si l'écart des informations de trajectoire par rapport à la trajectoire prédéfinie est dans la plage admissible prédéfinie ; ou
l'estimation du fait de savoir si le moment où le terminal entre les informations de trajectoire se situe dans une période de temps prescrite, et l'estimation du fait que l'écart des informations de trajectoire par rapport à la trajectoire prédéfinie se trouve dans une plage autorisée prédéfinie, et l'estimation de la réussite de la vérification si le moment où le terminal entre les informations de trajectoire se situe dans une période de temps prescrite, et l'écart des informations de trajectoire par rapport à la trajectoire prédéfinie se situe dans une plage admissible prédéfinie.

3. Procédé de vérification permettant de distinguer un homme d'une machine selon la revendication 1, dans lequel l'étape de « comparaison des informations de trajectoire avec une trajectoire prédéfinie » comprend spécifiquement :
la réception des informations de points d'échantillonnage multiples une fois à un intervalle d'un cycle prédéterminé pendant l'entrée des informations de trajectoire par le terminal, et la comparaison des informations de trajectoire avec la trajectoire prédéfinie selon les coordonnées des points d'échantillonnage multiples sur l'interface de vérification.

4. Procédé de vérification permettant de distinguer un homme d'une machine selon la revendication 2, dans lequel l'étape « estimation du fait de savoir si l'écart des informations de trajectoire par rapport à la trajectoire prédéfinie se trouve dans une plage autorisée prédéfinie » comprend spécifiquement :
le calcul d'une première distance entre un premier point d'échantillonnage dans les informations de trajectoire et une extrémité initiale correspondant dans la trajectoire prédéfinie, et l'estimation du fait de savoir si la première distance dépasse un premier seuil prédéfini ;
le calcul d'une deuxième distance entre un dernier point d'échantillonnage dans les informations de trajectoire et une dernière extrémité correspondant dans la trajectoire prédéfinie, et l'estimation du fait de savoir si la deuxième distance dépasse un deuxième seuil prédéfini ;
le calcul d'une troisième distance entre tout point d'échantillonnage entre l'extrémité initiale et la dernière extrémité dans les informations de trajectoire et la trajectoire prédéfinie, et l'estimation du fait de savoir si la troisième distance dépasse un troisième seuil prédéfini ;
si les distances respectives calculées ci-dessus ne parviennent pas toutes à dépasser les seuils prédéfinis respectifs, l'écart des informations de trajectoire par rapport à la trajectoire prédéfinie se situe dans une plage admissible prédéfinie, sinon l'écart des informations de trajectoire par rapport à la trajectoire prédéfinie ne se situe pas dans une plage admissible prédéfinie.

5. Procédé de vérification permettant de distinguer un homme d'une machine selon la revendication 2, dans lequel l'étape « estimation du fait de savoir si le moment où le terminal entre les informations de trajectoire se situe dans une période de temps prescrite » comprend spécifiquement :
la réception des informations de points d'échantillonnage multiples une fois à un intervalle d'un cycle prédéterminé pendant l'entrée des informations de trajectoire par le terminal,
si le nombre de points d'échantillonnage dépasse un nombre prédéfini de points d'échantillonnage, le moment pendant lequel le terminal entre les informations de trajectoire ne se situe pas dans la période de temps prescrite ;
si le nombre de points d'échantillonnage ne dépasse pas le nombre prédéfini de points d'échantillonnage, le moment où le terminal entre les informations de trajectoire se situe dans la période de temps prescrite.

6. Procédé de vérification permettant de distinguer un homme d'une machine selon la revendication 1, dans lequel, avant « la formation d'un code de vérification », le procédé comprend en outre :
le placement d'une icône de point de départ à une certaine extrémité de la trajectoire prédéfinie en tant qu'extrémité initiale de la trajectoire prédéfinie ; ou
la génération de manière aléatoire au moins d'une ligne d'interférence sur l'interface de vérification, la ligne d'interférence ayant une trajectoire différente de la trajectoire prédéfinie.

7. Appareil de vérification permettant de distinguer un homme d'une machine, comprenant :
un moyen de génération au moins trois points aléatoires sur une interface de vérification et de connexion tous les points aléatoires tour à tour avec des segments de ligne droite en tant que trajectoire prédéfinie ;
un moyen d'affichage de la trajectoire prédéfinie sur l'interface de vérification et de spécification d'un point de départ et d'un point d'arrivée ;
un moyen de réception des informations de trajectoire entrées par un terminal ;
un moyen de comparaison des informations de trajectoire avec la trajectoire prédéfinie ; et
un moyen d'estimation du fait de savoir si la vérification passe au moins par la dimensionnalité d'un résultat de comparaison des informations de trajectoire et la trajectoire prédéfinie,
dans lequel la trajectoire prédéfinie est générée de manière aléatoire, et est une ligne pliée constituée d'au moins deux segments de ligne.

8. Appareil de vérification permettant de distinguer un homme d'une machine selon la revendication 7, dans lequel le moyen d'estimation du fait de savoir si la vérification passe au moins par la dimensionnalité d'un résultat de comparaison des informations de trajectoire et la trajectoire prédéfinie :
le moyen d'estimation du fait de savoir si un écart des informations de trajectoire par rapport à la trajectoire prédéfinie se situe dans une plage admissible prédéfinie, et le moyen d'estimation du fait que la vérification est réussie si l'écart des informations de trajectoire par rapport à la trajectoire prédéfinie se situe dans la plage admissible prédéfinie ; ou
le moyen d'estimation du fait de savoir si le moment où le terminal entré des informations de trajectoire se situe dans une période de temps prescrite, et le moyen d'estimation du fait de savoir si l'écart des informations de trajectoire par rapport à la trajectoire prédéfinie se situe dans une plage admissible prédéfinie, et le moyen d'estimation de la réussite de la vérification du fait que le moment où le terminal entre les informations de trajectoire se situe dans une période de temps prescrite, et l'écart des informations de trajectoire par rapport à la trajectoire prédéfinie se situe dans une plage admissible prédéfinie.

9. Appareil de vérification permettant de distinguer un homme d'une machine selon la revendication 7, dans lequel le moyen de comparaison des informations de trajectoire avec une trajectoire prédéfinie comprend spécifiquement :
le moyen de réception des informations de points d'échantillonnage multiples une fois à un intervalle d'un cycle prédéterminé pendant l'entrée des informations de trajectoire par le terminal ; et
le moyen de comparaison des informations de trajectoire avec la trajectoire prédéfinie selon les coordonnées de points d'échantillonnage multiples sur l'interface de vérification.

10. Appareil de vérification permettant de distinguer un homme d'une machine selon la revendication 8, dans lequel le moyen d'estimation du fait de savoir si l'écart des informations de trajectoire par rapport à la trajectoire prédéfinie se situe dans une plage admissible prédéfinie comprenant spécifiquement :
le moyen de calcul d'une première distance entre un premier point d'échantillonnage dans les informations de trajectoire et une extrémité initiale correspondant dans la trajectoire prédéfinie, et d'estimation du fait de savoir si la première distance dépasse un premier seuil prédéfini ;
le moyen de calcul d'une deuxième distance entre un dernier point d'échantillonnage dans les informations de trajectoire et une dernière extrémité correspondant dans la trajectoire prédéfinie, et d'estimation du fait de savoir si la deuxième distance dépasse un deuxième seuil prédéfini ;
le moyen de calcul d'une troisième distance entre tout point d'échantillonnage entre l'extrémité initiale et la dernière extrémité dans les informations de trajectoire et la trajectoire prédéfinie, et d'estimation du fait de savoir si la troisième distance dépasse un troisième seuil prédéfini ;
si les distances respectives calculées ci-dessus ne parviennent pas toutes à dépasser les seuils prédéfinis respectifs, l'écart des informations de trajectoire par rapport à la trajectoire prédéfinie se situe dans une plage admissible prédéfinie, sinon l'écart des informations de trajectoire par rapport à la trajectoire prédéfinie ne se situe pas dans une plage admissible prédéfinie.

11. Appareil de vérification permettant de distinguer un homme d'une machine selon la revendication 8, dans lequel le moyen d'estimation du fait de savoir si le moment où le terminal entre les informations de trajectoire se situe dans une période de temps prescrite comprend spécifiquement :
le moyen de réception des informations de points d'échantillonnage multiples une fois à un intervalle d'un cycle prédéterminé pendant l'entrée des informations de trajectoire par le terminal,
si le nombre de points d'échantillonnage dépasse un nombre prédéfini de points d'échantillonnage, le moment où le termeinal entre les informations de trajectoire ne se situe pas dans la période de temps prescrite ;
si le nombre de points d'échantillonnage ne dépasse pas le nombre prédéfini de points d'échantillonnage, le moment où le terminal entre les informations de trajectoire se situe dans la période de temps prescrite.

12. Appareil de vérification permettant de distinguer un homme d'une machine selon la revendication 7, dans lequel, avant le moyen de formation d'un code de vérification, l'appareil comprend en outre :
le moyen permettant de mettre une icône de point de départ à une certaine extrémité de la trajectoire prédéfinie en tant qu'extrémité initiale de la trajectoire prédéfinie ; ou
la génération de manière aléatoire au moins d'une ligne d'interférence sur l'interface de vérification, la ligne d'interférence ayant une trajectoire différente de la trajectoire prédéfinie.

13. Support de stockage informatique non volatile dans lequel un ou plusieurs programmes sont stockés, un appareil selon l'une quelconque des revendications 1 à 6 lorsque lesdits un ou plusieurs programmes sont exécutés par l'appareil.
